Europäisches Patentamt

European Patent Office

Office européen des brevets

(11) Publication number: **0 057 625**
**A2**

## (12) EUROPEAN PATENT APPLICATION

(21) Application number: **82400089.7**

(22) Date of filing: **18.01.82**

(51) Int. Cl.³: **B 23 B 27/08**

(30) Priority: **02.02.81 US 230229**

(43) Date of publication of application: **11.08.82**
**Bulletin 82/32**

(84) Designated Contracting States: **BE CH DE FR GB IT LI NL SE**

(71) Applicant: **THE WARNER AND SWASEY COMPANY, 11000 Cedar Avenue, Cleveland Ohio 44106 (US)**

(72) Inventor: **Huston, Mark F., 476 Colony Road, Canal Fulton Ohio 44614 (US)**

(74) Representative: **Brullé, Jean et al, Service Brevets Bendix 44, rue François 1er, F-75008 Paris (FR)**

(54) Regrindable metal cutting insert.

(57) A regrindable metal cutting insert (10) having a cutting edge (31) and an associated chip control surface (52) and at least one additional chip control surface (62) disposed behind the cutting edge (31) and being exposed only when a selected portion of the insert is ground away to form a new cutting edge. Chip configuration control is effected by means of a cutting edge formed with a transverse rake face (52) extending to a top shoulder (64) above and behind the cutting edge (31) and a rearward extending channel (50) that penetrates both the top of the insert (64) and the shelf type cutting edge (31). Additonal transverse shelves (62) are formed at spaced apart locations behind the cutting edge (31). When regrinding is necessary, the insert (10) can be ground back to the next rearward disposed shelf (62) forming a new cutting edge with an associated chip control configuration. The rake face (52) associated with a cutting edge (31) of the insert can be coated with a suitable material such as titanium nitride. The insert (10) after grinding will still have a coated rake face associated with the new cutting edge.

Regrindable metal cutting insert

This invention relates to metal working and more particularly to a regrindable chip controlling metal cutting insert.

Metal cutting inserts having chip controlling shapes are known in the art. U.S. Patent No. 3,654,681 discloses a metal cutoff tool characterized by the fact that the cutting portion thereof is provided with a chip breaker surface that includes opposed chamfer surfaces located rearwardly of the cutting edge that assist in providing clearance for chip removal purposes. U.S. Patent No. 3,815,191 teaches a chip forming insert which imparts to the chip a longitudinally extending bulge or thickened portion which stiffens the chip and modifies its form. U.S. Patent No. 3,973,308 teaches a cutting tool which has several depressions or notches separated from each other and situated inside and spaced from the cutting edge. U.S. Patent No. 2,164, 303 teaches a metal cutting tool having grooves extending from nicks in the cutting edge.

It is an object of this invention to teach a regrindable chip controlling insert or tool.

It is an object of this invention to teach a metal cutting insert having a plurality of spaced apart chip configuring surfaces which are exposed when the insert is ground back a selected distance to define a new cutting edge.

The present invention proposes a regrindable metal cutting insert having a first cutting edge and an associated chip configurating surface which cause chips to form in a desired configuration characterized in that a second chip configuring surface is disposed behind and spaced apart from the first chip configuring surface and being protected from chip engagement until the first cutting edge, and associated chip configuring surface and a portion of the insert are removed to define a new cutting edge continuous with the second chip forming surface.

The present invention provides a chip controlling metal cutting insert having a plutality of rearward disposed chip forming and controlling surfaces which are sequentially exposed as the insert is ground back a selected distance to define a new cutting chip. The disclosed insert has a first cutting edge with an associated chip controlling surface for causing chips to form in a desired configuration. One or more additional chip controlling surfaces are disposed behind the first chip controlling surface but are positioned to be shielded from chip engagement until the preceding chip forming surface is ground away to define a new cutting edge.

The disclosed insert will provide chip control over a wide range of speeds, feeds, and materials and due to its repetitive shape will be regrindable. If a coating is applied to the insert each chip configuring surface will still have an associated coated rake face after regrinding.

The disclosed chip conforming regrindable insert can be used as a cutoff tool. When used for a cutoff tool, a channel ground on the top of the insert centered in its width and extending along its longitudinal axis can be provided. Multiple transverse grooves, not as deep as the longitudinal channel, are provided at spaced apart locations, along the channel length. A cutting edge is formed at the front of the insert, beneath the top rake surface but above the channel bottom. A shelf shaped surface extends from the cutting edge to a top surface of the insert. The channel acts to narrow the chips while the rear of the shelf curls the chips to a point of breaking them into desired small shapes. Different dimensions and shapes of the channel and rearward extending shelf surfaces can be provided for good chip control over a wide range of speed and feed conditions. The insert can be ground back to the next transverse groove to provide a new cutting edge without destroying the desired chip controlling geometry. The bottom of the remaining portion of the transverse groove will be contiguous with the new cutting edge. Depending on how much of the groove is removed, the cutting edge can be given a positive, negative, or neutral rake face angle. The channel and shelf arrangement for the cutting edge can remain the same when the insert is reground back the proper selected distance. Alternately, the channel and shelf arrangement for the cutting edge can be varied as to depth, width and form of successive cutting edges.

For a better understanding of the invention, reference may be had to the preferred embodiment exemplary of the invention shown in the accompanying drawings in which:

Figure 1 is an enlarged perspective view of a portion of a cutoff insert constructed according to the teaching of the present invention;

Figure 2 is a top plan view of an insert constructed according to the teaching of the present invention;

Figure 3 is a side elevation view of the insert shown in Figure 2;

Figure 4 is a front view of the insert shown in Figure 2;

Figure 5 is a section view of the insert shown in Figure 4 taken along the line V-V;

Figure 6 is a side elevation view of an insert, as shown in Figure 1, ground to provide a positive rake angle;

Figure 7 is a side elevation of an insert, as shown in Figure 1, ground to provide a negative rake angle;

Figure 8 is a side elevation view of an insert with grooves which will provide a negative rake angle over their width;

Figure 9 is a side elevation view of an insert with grooves which will provide a positive rake angle over their width;

Figure 10 is a top view of a cutoff insert wherein the top of the tip portion is higher than the top of the shank portion;

Figure 11 is a side view of the insert shown in Figure 10;

Figure 12 is a top view of a cutoff insert wherein the cutting edge is formed on a radius;

Figure 13 is a side view of the insert shown in Figure 12;

Figure 14 is a plan view of a turning insert according to the present invention;

Figure 15 is a side view of the insert of Figure 14;

Figure 16 is a plan view of another embodiment of a turning insert according to the invention;

Figure 17 is a view of the insert of Figure 16 along the line XVII-XVII;

Figure 18 is a side view of a double ended insert; and

Figure 19 is a front view of the insert shown in Figure 18.

Referring now to the drawings, there is shown a metal cutoff insert 10 constructed according to the teaching of the present invention. Insert 10 includes a shank or body portion 11 and a tip portion 12. The shank 11 and tip 12 are arranged coextensively to define an overall insert 10 of an elongated configuration. The shank 11 includes a top surface 20, opposed side surfaces 21 and 22, and a truncated V-shaped bottom surface 23, with the arrangement of these parts being similar to the arrangement shown in connection with Novkov, U.S. Patent No. 2,964,833 whose teachings are herein incorporated by reference.

Carbide tip 12 includes a transversely extending cutting edge 31 that is defined by the top of a forward face 32. Tip 12 includes a V-shaped bottom surface 35 and opposed side walls 36 and 37. The side walls 36 and 37 are preferably ground so as to provide the requisite degree of side and back clearance in the manner well known in the prior art. Tip 12 is fused in a known manner to the forward end of the shank 11 by brazing or other known metal joining techniques. Chamfers 40 and 41 are provided at the joint of juncture between the top surface 64 and the opposed side surfaces 36 and 37. The effect and purpose of the chamfers 40 and 41 is fully des-

0057625

cribed in Stein U.S. Patent 3,654,681 whose teachings are herein incorporated by reference.

Tip 12 includes a longitudinal groove or channel 50 extending rearward from cutting edge 31. A curved shelf shaped rake portion 52 is provided extending rearward and upward from cutting edge 31 to a top surface 64. Longitudinal channel 50 extends through the cutting edge 31 and the shaped rake portion 52. Channel 50 may extend through the entire length of tip 12, but need not do so.

During a metal cutting operation, longitudinal channel 50 acts to narrow a chip while the curved shelf portion 52 curls the chip to the point of breaking into clockspring or figure-nine shapes which are well known in this art. Dimensions of the channel 50 and shaped rake portion 52, and radii on the rear of the shaped rake portion 52, can all be varied to provide good chip control over a wide range of speed and feed conditions. In use, the illustrated chip controlling geometry has provided good chip control.

A succession of transverse grooves 62 are provided across cutting tip 12. Grooves 62 are not as deep as the longitudinal channel 50 and are preferably perpendicular to and spaced along the length of tip 12. After a period of metal cutting as the cutting edge 31 becomes worn the tip 12 can be reground back to the next successive groove 62 to provide a new cutting edge 31 having associated therewith a shaped chip controlling surface which is very similar or identical to the chip controlling shape with the original cutting edge. Tip 12 narrows slightly as it extends rearward. Thus, each new ground cutting edge will be slightly narrower than the preceding cutting edge.

For high speed stell cut off blades, the blade need not be narrowed or be tapered as it extends rearward from the cutting edge. If these parallel blades are formed with a regrindable chip control geometry, as disclosed, the cutting edge will remain the same width even after being reground. This characteristic of no change in width after regrind would be beneficial on multiple spindle automatic machines where part length is determined by the location of the cutoff tool and the width of the cutting edge must remain the same.

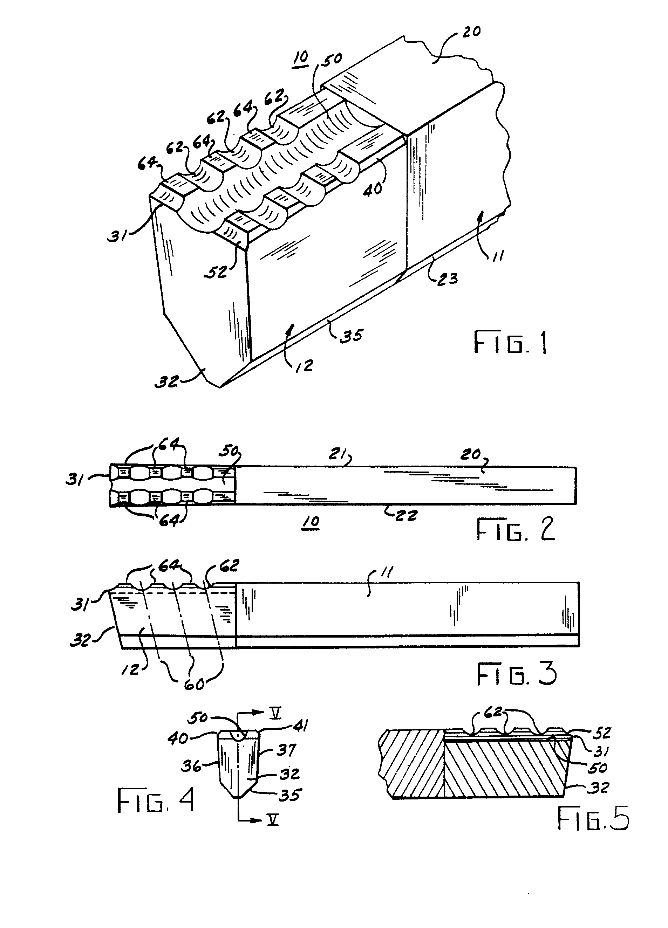

In the cutting tool illustrated in Figure 1 the tip can be reground three times. When tip 12 is ground back the proper selected distance a new cutting edge 31 is defined and the portion of groove 62 remaining forms a new surface similar to 52 and provides chip control as explained above. For an insert having a cutting edge width of 4.8 mm, a groove 62 width of 1.5 mm and depth of .3 mm and channel 50 width of 1.9 mm and depth of .51 mm have been found to work well.

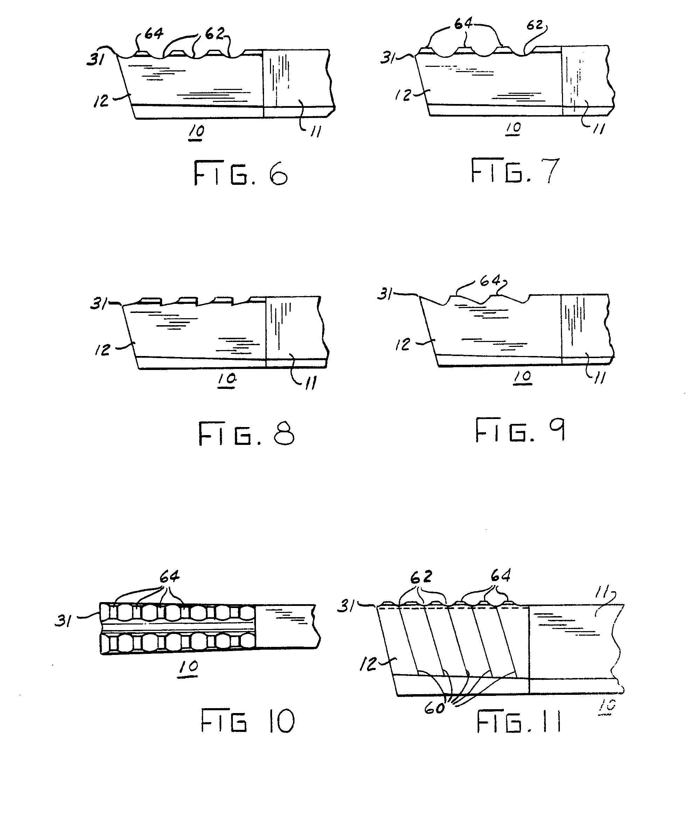

Referring now to Figure 3, dashed lines 60 indicate the lines to which tip 12 is ground to provide new cutting edges having associated substantially identical chip controlling surfaces. However, tip 12 can be ground back either a little to the right or left of line 60, as shown in Figure 3, to provide a cutting edge with a different rake angle. If desired, lines 60 can be physically marked on cutting tip 12 by a known method such as laser etching, electroetching, grinding, or the like. If lines are physically formed on tip 12 this could greatly facilitate regrinding. The insert shown in Figure 3 has a neutral rake angle, and if it is ground back to line 60 the new cutting edge will also have a neutral rake angle. If, however, tip 12 is ground back to provide a cutting edge 31, as shown in Figure 6, slightly to the left of Figure 3 line 60, but still within groove 62, a positive rake angle will be provided. On the other hand, if tip 12 is ground back to provide a cutting edge 31, as shown in Figure 7, slightly to the right of Figure 3 line 60, but still within groove 62 a negative rake angle will be provided.

It should also be understood that while groove 62 is shown with a semi-circle configuration, numerous other configurations can be provided. For example, as shown in Figure 8, the front of the cross groove can drop sharply, then slant up to the top 64 of insert 10. This construction would provide a groove having a negative rake over most of its width. Alternatively, as shown in Figure 9, the cross groove could slope downward from the top 64 and blend into a rear wall which cruves up to the top 64. This construction would provide a groove having a positive rake over its width. Of course, various other groove shapes can be provided, and also the groove shapes provided on a single insert can be individually different.

The tip 12 can be coated with a desired coating such as titanium nitride, titanium carbide, or aluminum oxide. The desired coating is preferably applied after the desired shapes are formed in the top of tip 12. Thus, after each regrind each new chip controlling surface will still have associated therewith a coated rake face.

During use, only the chip controlling surface 52 associated with the cutting edge 31 will be exposed to direct chip engagement. That is, the successive recessed grooves 62 will not be exposed to direct chip contact until tip 12 is ground back to define a new cutting edge extending through the associated groove 62. While in the preferred embodiment the cutting edge 31 extends at 90 degrees to the longitudinal axis of tool 10 and groove 62 extends at 90 degrees to the centerline, and the longitudinal channel extends parallel to the centerline, there may be instances when other configurations are more desirable. The teaching of the invention can still be practiced if grooves 62 are not at 90 degrees to the centerline, if the cutting edge is not at 90 degrees to the centerline, if grooves 62 are not parallel or of the same shape, or if the longitudinal channel 50 is not parallel to the centerline of insert 11. Further, it is not necessary that channel 50 be continuous or that groove 62 or channel 50 be of uniform cross section or exactly central to edge 31.

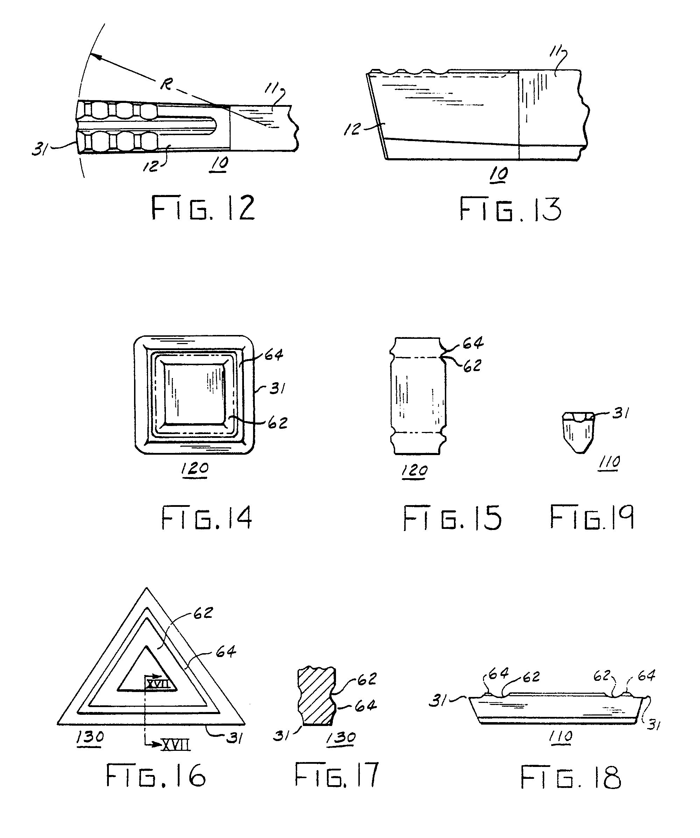

Figures 10 and 11 show an embodiment of cutoff insert 10 wherein the top of top of tip 12 is higher than the top of shank 11. Figures 12 and 13 show an embodiment of cutoff insert 10 wherein the front cutting edge is formed along a selected radius, R. Figures 18 and 19 show a double ended cutoff insert 110.

The disclosed cutoff insert 10 provides good chip control over a wide range of speeds, feeds, and materials. Cutoff insert 10 is also regrindable a number of times, depending on the number of transverse grooves 62 provided in tip 12. The teaching of this invention, while generally explained in terms of a cutoff insert 10 are not limited thereto, but are applicable to a wide range of cutting tools and inserts. When the terms insert or tool are used in the specification or claims, it is intended that they be construed to mean both inserts and tools. Figures 14 and 15 and Figures 16 and 17 show turning inserts 120 and 130 respectively, constructed according to the present invention.

Claims:

1. A regrindable metal cutting insert (10) having a first cutting edge (31) and an associated chip configurating surface (52) which cause chips to form in a desired configuration characterized in that a second chip configuring surface (62) is disposed behind and spaced apart from the first chip configuring surface (52) and being protected from chip engagement until the first cutting edge (31) and associated chip configuring surface (52) and a portion (64) of the insert are removed to define a new cutting edge continuous with the second chip forming surface.

2. A metal cutting insert according to Claim 1, characterized in that it comprises a marking (60) formed thereon for indicating the portion of the insert to be removed to define the new cutting edge.

3. A metal cutting insert according to Claim 1, characterized in that it comprises additional chip configuring surfaces disposed behind said second chip configuring surface and being spaced apart.

4. A metal cutting insert according to Claim 3, characterized in that the associated chip configuring surface comprises a notch (50) formed in the first cutting edge (31) and extending rearward, and a shaped surface (52) extending from the first cutting edge (31) to the insert top.

5. A metal cutting insert according to Claim 4, characterized in that the shapes of the associated chip configuring surface, said second chip configuring surface, and said additional chip configuring surfaces are substantially the same.

6. A metal cutting insert according to Claim 3, characterized in that said second chip configuring surface (62) and said additional chip configuring surfaces are defined by a notch groove (50) extending rearward from the first cutting edge (31) and a plurality of cross grooves (62), shallower than the notch groove (50) and extending therethrough.

7. A metal cutting insert according to Claim 6, characterized in that said notch groove (50) extends perpendicular from the first cutting edge (31), and said plurality of cross grooves (62) extend perpendicular to said notch groove (50).

8. A metal cutting insert according to any of Claims 1 to 7, characterized in that a coating is applied to at least a portion of the insert.

9. A metal cutting insert according to Claim 8, characterized in that said coating is titanium nitride.

0057625

FIG. 1

FIG. 2

FIG. 3

FIG. 4

FIG. 5

FIG. 6

FIG. 7

FIG. 8

FIG. 9

FIG 10

FIG. 11

FIG. 12

FIG. 13

FIG. 14

FIG. 15

FIG. 19

FIG. 16

FIG. 17

FIG. 18